# EUROPEAN PATENT APPLICATION

(11) **EP 1 754 991 A1**
(43) Date of publication of application: **21.02.2007**
(21) Application number: 05017962.1
(22) Date of filing: 18.08.2005
(51) Int. Cl.: G02C 3/02, H01F 7/02

(54) **Movable magnetic coupling system for securing a one-piece lens to a cap visor**

(71) Applicant: Hsiao, Yu-Teng, Chia I, R.O.C. (TW)
(72) Inventor: Hsiao, Yu-Teng, Chia I, R.O.C. (TW)
(74) Representative: Casalonga, Axel

(57) **Abstract**

A movable magnetic coupling system is provided for securing a one-piece lens to a cap visor. The movable magnetic coupling system includes a magnet-receiving block inlaid in a cap visor and a protruding member pivotally assembled with a universal connector thereon and mounted on the top rim of a one-piece lens. The magnet-receiving block is provided with sliding grooves therein, and at least one strong magnetic article is provided in each sliding groove. The protruding member is provided with a screwing hole therein for pivotally assembling with the universal connector, which is provided with at least one strong magnetic article therein, so as for the one-piece lens convenient to be pivotally and movably coupled to the cap visor by the mutual magnetic attractive force of the magnetic articles in the sliding grooves and in the universal connector.

## Description

This invention relates to a movable magnetic coupling system for securing a one-piece lens to a cap visor, and more particularly to a magnetic coupling system which can be easily moved to adjust the position of a one-piece lens for better visual field, and the angle of a one-piece lens can be adjusted for better visual field or storage.

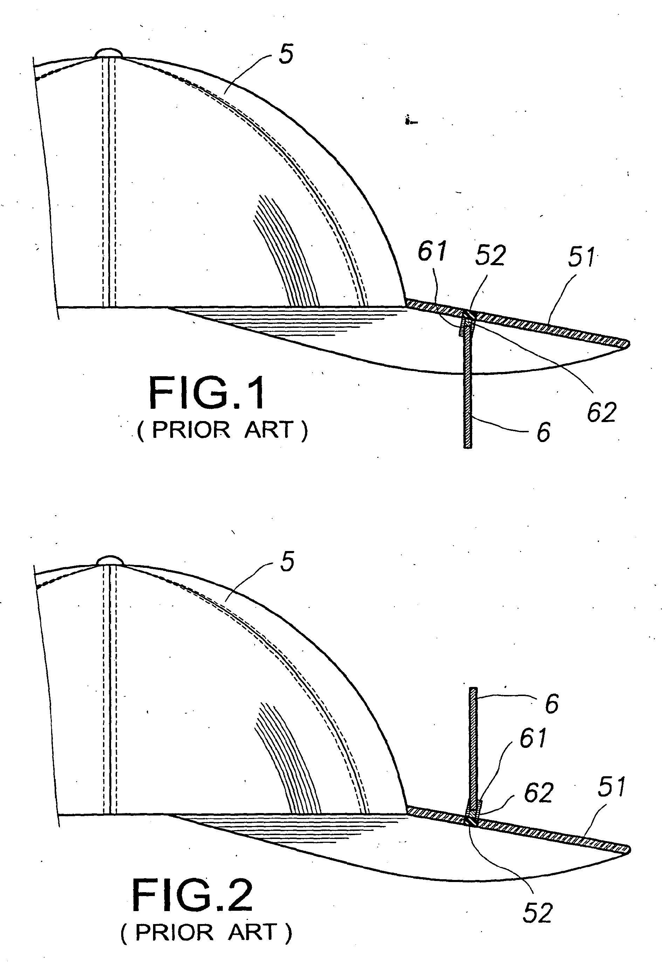

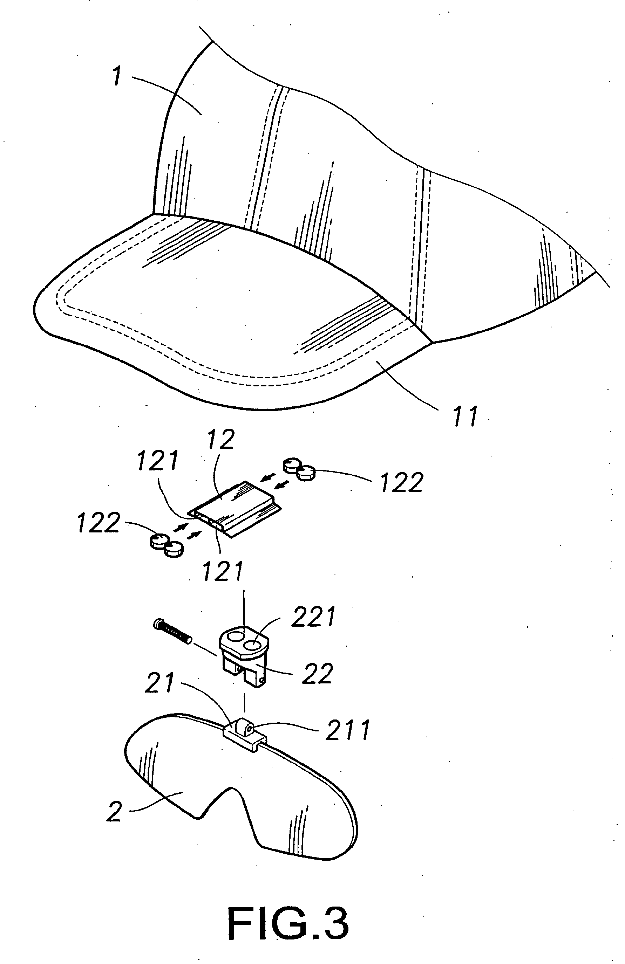

Referring to FIGS. 1 and 2, a conventional magnetic coupling system for securing a one-piece lens 6 to a visor 51 of a cap 5, invented by the inventor of the present invention, includes at least one coupling magnetic article 52 inlaid in the cap visor 51 and a protruding member 61 provided with at least one coupling magnetic article 62 therein and mounted on the top rim of the one-piece lens 6 so as for the one-piece lens 6 convenient to be securely coupled to the cap visor 51 by the mutual magnetic attractive force of the at least one magnetic article 52 inlaid in the cap visor 51 and the at least one magnetic article 62 in the protruding member 61.

Although it is practical while being applied, there are following drawbacks in the above-mentioned conventional magnetic coupling system :
1. The coupling magnetic article 52 is fixedly inlaid in the cap visor 51, it is impossible for a wearer to adjust the position of the one-piece lens 6 after the one-piece lens 6 securing to the cap visor 51, and it causes much inconvenience to a wearer.
2. Because the one-piece lens 6 is not pivotally secured to the cap visor 51, if the one-piece lens 6 is not needed, a wearer must take off the one-piece lens 6 for storage, and it causes much trouble to a wearer.

Therefore, the present invention is directed to a movable magnetic coupling system for securing a one-piece lens to a cap visor that substantially obviates the drawbacks of the above-mentioned conventional art.

An objective of the present invention is to provide a movable magnetic coupling system which is provided with a magnet-receiving block inlaid in a cap visor for magnets able to move in the sliding grooves, convenient for a wearer to adjust the position of the one-piece lens for better visual field after the one-piece lens securing to the cap visor.

Another objective of the present invention is to provide a movable magnetic coupling system whose one-piece lens is pivotally secured to the cap visor so that it can be adjusted to any preferable angle for better visual field or for storage.

Yet another objective of the present invention is to provide a movable magnetic coupling system whose ornamental block can present the effect of advertisement or aesthetic appearance.

Accordingly, a movable magnetic coupling system in the present invention is provided for securing a one-piece lens to a cap visor. The movable magnetic coupling system includes a magnet-receiving block inlaid in the visor at the front of a cap and a protruding member pivotally assembled with a universal connector thereon and mounted on the top rim of a one-piece lens. The magnet-receiving block is provided with sliding grooves therein, and at least one strong magnetic article is provided in each sliding groove. The protruding member is provided with a screwing hole therein for pivotally assembling with the universal connector, and the universal connector is provided with at least one strong magnetic article therein, so as for the one-piece lens convenient to be pivotally and movably coupled to the cap visor by the mutual magnetic attractive force of the magnetic articles in the sliding grooves and in the universal connector.

Other features and advantages of the present invention will become apparent in the following detailed description of the preferred embodiments with reference to the accompanying drawings, in which :
FIG. 1 is a side sectional view of a cap visor and a one-piece lens in a coupled configuration with a conventional coupling system;
FIG. 2 is another side sectional view of a cap visor and a one-piece lens in a coupled configuration with a conventional coupling system;
FIG. 3 is an exploded perspective view of an embodiment of a cap visor and a one-piece lens with movable magnetic coupling system in accordance with the present invention;
FIG. 4 is a perspective view of the magnet-receiving block of the movable magnetic coupling system in accordance with the present invention;
FIG. 5 is a perspective view of an embodiment of a cap visor and a one-piece lens with the movable magnetic coupling system in a coupled configuration in accordance with the present invention;
FIG. 6 is a schematic sectional view of an embodiment of a cap visor and a one-piece lens in a coupled configuration in accordance with the present invention showing the one-piece lens being moved to adjust its position on the cap visor;
FIG. 7 is a schematic sectional view of an embodiment of a cap visor and a one-piece lens in a coupled configuration in accordance with the present invention showing the one-piece lens being turned to adjust its angle;
FIG. 8 is an exploded perspective view of another embodiment of a cap visor and a one-piece with the movable magnetic coupling system in accordance with the present invention;
FIG. 9 is a perspective view of another embodiment of a cap visor and a one-piece with the movable magnetic coupling system in a coupled configuration in accordance with the present invention; and,
FIG. 10 is a schematic sectional view of another embodiment of a cap visor and a one-piece lens in a coupled configuration in accordance with the present invention showing the one-piece lens being moved to adjust its position or turned to adjust its angle.

Referring to FIG. 3, the present invention is provided with a movable magnetic coupling system for securing a one-piece lens 2 to a visor 11 of a cap 1. An embodiment of the movable magnetic coupling system includes a magnet-receiving block 12 inlaid in the visor 11 at the front of a cap 1 and a protruding member 21 pivotally assembled with a universal connector 22 thereon and mounted on the top rim of a one-piece lens 2. The magnet-receiving block 12 is provided with sliding grooves 121 therein, and at least one strong magnetic article 122 is provided in each sliding groove 121. The protruding member 21 is provided with a screwing hole 211 therein for pivotally assembling with the universal connector 22, and the universal connector 22 is provided with at least one strong magnetic article 221 therein, so as for the one-piece lens 2 convenient to be pivotally and movably coupled to the cap visor 11 by the mutual magnetic attractive force of the magnetic articles 122, 221 in the sliding grooves 121 and in the universal connector 22.

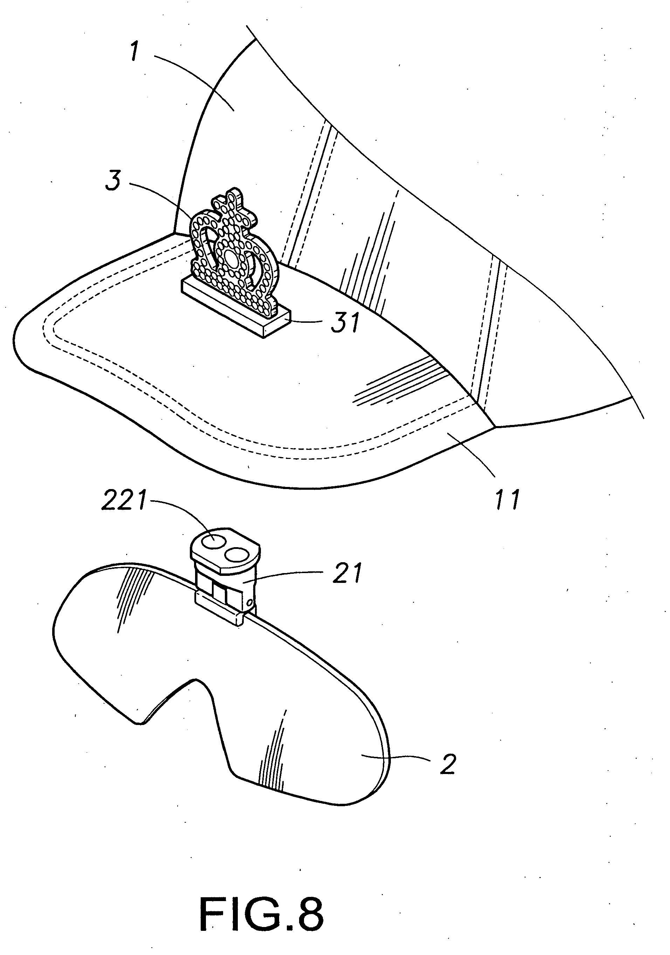

Referring to FIG. 8, another embodiment of the movable magnetic coupling system for securing a one-piece lens 2 to a cap visor 11 in the present invention includes an ornamental block 3 and a one-piece lens 2. The ornamental block 3 may be various kinds of configuration, and at least one strong magnetic article 31 is provided at the bottom of the ornamental block 3. A protruding member 21 pivotally assembled with a universal connector 22 thereon and mounted on the top rim of the one-piece lens 2, the protruding member 21 is provided with a screwing hole 211 therein for pivotally assembling with the universal connector 22,and the universal connector 22 is provided with at least one strong magnetic article 221 therein.

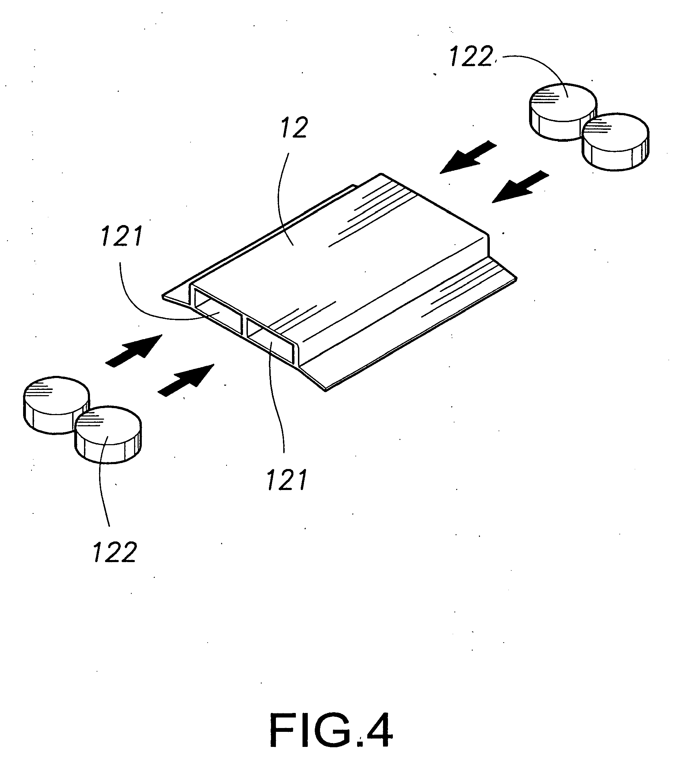

While being assembled, referring to FIG. 4, the magnetic articles 122 are respectively inserted into the sliding grooves 121 of the magnet-receiving block 12, and then the magnet-receiving block 12 is inlaid in the cap visor 11.

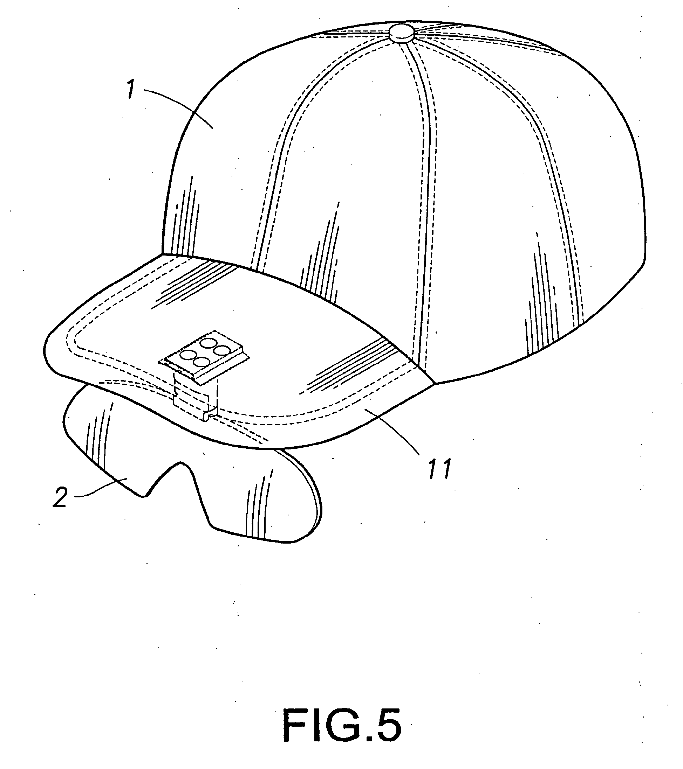

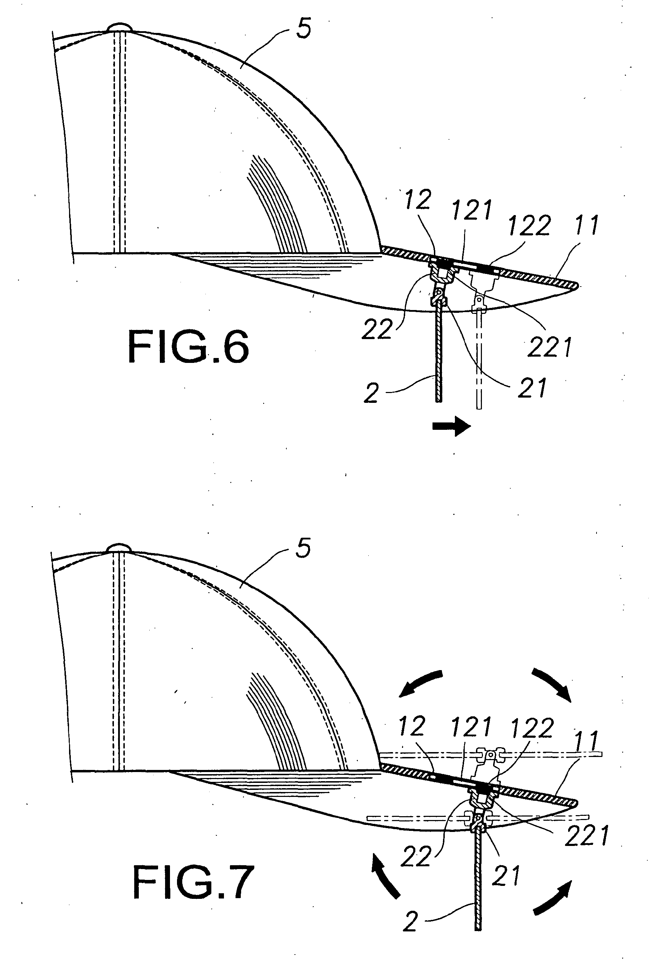

While an embodiment of the movable magnetic coupling system for securing a one-piece lens 2 to a cap visor 11 in the present invention being applied, referring to FIGS. 5 and 6, the one-piece lens 2 is coupled to a cap visor 11 by the mutual magnetic attractive force of the strong magnetic articles 122, 221 in the magnet- receiving block 12 and in the universal connector 22. If a wearer wants to adjust the position of the one-piece lens 2, the one-piece lens 2 may be moved outwardly or inwardly to make the at least one strong magnetic article 122 move accordingly in the sliding grooves 121 of the magnet-receiving block 12 for better visual field. If a wearer wants to adjust the angle of the one-piece lens 2, the one-piece lens 2 may be turned to forwardly or backwardly to adjust the angle of the one-piece lens 2 for better visual field. If the one-piece lens 2 is not necessary, the one-piece lens 2 may be placed on the top surface of the cap visor 11 and then turned forwardly or backwardly for storage, as shown in FIG. 7.

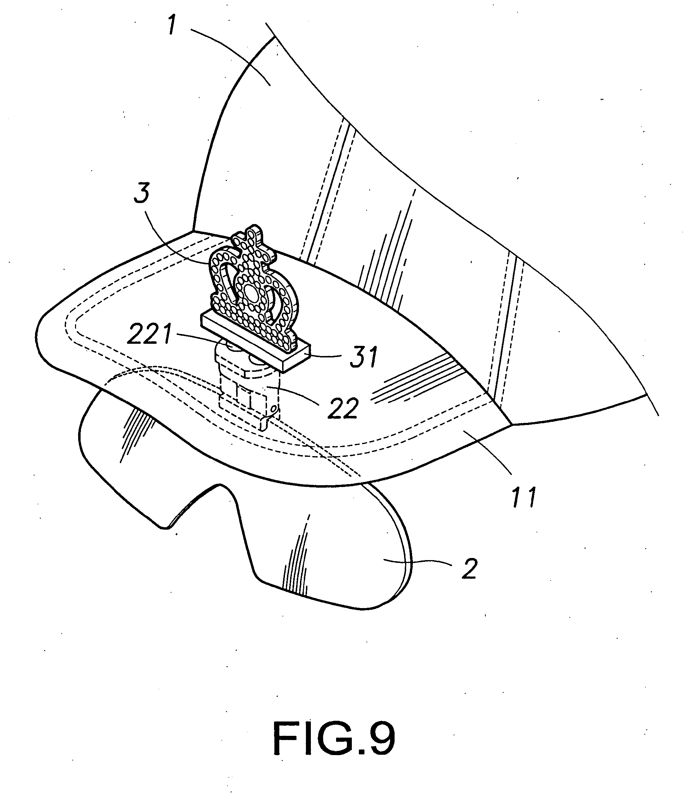

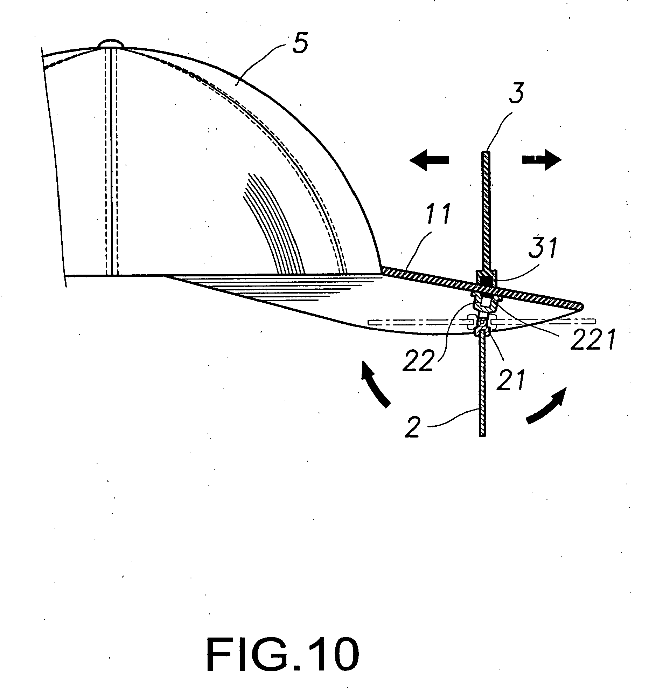

While another embodiment of the movable magnetic coupling system for securing a one-piece lens 2 to a cap visor 11 in the present invention being applied, referring to FIGS. 9 and 10, the ornamental block 3 and the one-piece lens 2 are respectively placed on the top surface and the bottom surface of the cap visor 11 and registered to each other at the same time, so as for the ornamental block 3 and the one-piece lens 2 to be secured to the cap visor 11 by the mutual magnetic attractive force of the strong magnetic articles 31, 221 in the bottom of the ornamental block 3 and in the universal connector 22. If the one-piece lens 2 is moved on the cap visor 11, the ornamental block 3 will accordingly move on the cap visor 11, so as to have the effect of advertisement or aesthetic appearance. If a wearer wants to adjust the angle of the one-piece lens 2, the one-piece lens 2 may be turned to forwardly or backwardly to adjust the angle of the one-piece lens 2 for better visual field or for storage.

While the preferred embodiments of the invention have been described above, it will be recognized and understood that various modifications may be made therein and the appended claims are intended to cover all such modifications which may fall within the spirit and scope of the invention.

## Claims

1. A movable magnetic coupling system for securing a one-piece lens to a cap visor comprising :
a magnet-receiving block being inlaid in a cap visor, said magnet-receiving block being provided with sliding grooves therein, and at least one strong magnetic article being provided in each said sliding groove.

2. A movable magnetic coupling system for securing a one-piece lens to a cap visor as recited in claim 1, wherein a protruding member is pivotally assembled with a universal connector thereon and mounted on the top rim of a one-piece lens, said protruding member is provided with a screwing hole therein for pivotally assembling with a universal connector, and said universal connector is provided with at least one strong magnetic article therein.

3. A movable magnetic coupling system for securing a one-piece lens to a cap visor comprising :
an ornamental block being a predetermined configuration, at least one strong magnetic article being provided at the bottom of said ornamental block; and,
a protruding member being pivotally assembled with a universal connector thereon and mounted on the top rim of a one-piece lens, said protruding member being provided with a screwing hole therein for pivotally assembling with said universal connector, and said universal connector being provided with at least one strong magnetic article therein.
